Europäisches Patentamt

European Patent Office

Office européen des brevets

(11) Veröffentlichungsnummer: **0 199 710**
**B1**

(12) **EUROPÄISCHE PATENTSCHRIFT**

(45) Veröffentlichungstag der Patentschrift:
26.09.90

(21) Anmeldenummer: **86890099.4**

(22) Anmeldetag: **09.04.86**

(51) Int. Cl.⁵: **B01D 11/04**, B01D 17/06

(54) **Elektrolysezelle sowie Verwendung derselben zur Spaltung von Emulsionen, zur Flotation und/oder zur Flüssig-Flüssig-Extraktion unter Anwendung eines elektrischen Feldes.**

(30) Priorität: **09.04.85 AT 1066/85**

(43) Veröffentlichungstag der Anmeldung:
**29.10.86 Patentblatt 86/44**

(45) Bekanntmachung des Hinweises auf die Patenterteilung:
**26.09.90 Patentblatt 90/39**

(84) Benannte Vertragsstaaten:
**BE CH DE FR GB IT LI LU NL SE**

(56) Entgegenhaltungen:
**CH-A- 376 089**
**FR-A- 1 064 690**
**FR-A- 1 091 919**
**FR-A- 2 204 437**
**US-A- 2 914 385**
**US-A- 3 649 508**

(73) Patentinhaber: **VOEST-ALPINE Aktiengesellschaft,
Friedrichstrasse 4, A-1011 Wien(AT)**

(72) Erfinder: **Cvitas, Villm, Dipl.-Ing., Voltastrasse 29,
A-4040 Linz(AT)**
Erfinder: **Faltejsek, Karl, Dipl.-Ing.,
Lüfteneggerstrasse 6, A-4020 Linz(AT)**
Erfinder: **Klinar, Gottfried, Alpenstrasse 33,
A-8707 Leoben(AT)**
Erfinder: **Hanke, Reinhardt, Dipl.-Ing., Annaberggasse 2,
A-8700 Leoben(AT)**

(74) Vertreter: **Haffner, Thomas M., Dr. et al,
Patentanwaltskanzlei Dipl.-Ing. Adolf Kretschmer Dr.
Thomas M. Haffner Schottengasse 3a, A-1014 Wien(AT)**

**Beschreibung**

Die Erfindung bezieht sich auf eine Elektrolysezelle mit in einen Elektrolyten eintauchenden Elektroden, einer Zuflußöffnung, einer Abflußöffnung und einem Gasabzug, wobei eine Elektrode von rotierbar gelagerten Scheiben gebildet ist, welche über einen Teil ihrer Oberfläche in den Elektrolyten eintauchen und deren Rotationsachse im wesentlichen parallel zur Flüssigkeitsoberfläche angeordnet ist, sowie auf die Verwendung einer derartigen Einrichtung zur Spaltung von Emulsionen, zur Flotation und/oder zur Flüssig-Flüssig-Extraktion unter Anwendung eines elektrischen Feldes.

Aus der US-A 1 347 088 ist ein Elektrolyseapparat bekanntgeworden, bei dem eine Elektrode von rotierbar gelagerten Scheiben und die zweite Elektrode von fixen Platten gebildet wird und bei dem die Rotationsachse der Scheiben im wesentlichen parallel zur Oberfläche der Flüssigkeit ist. In mehreren hintereinander angeordneten Elektrolyseapparaten sollen dabei die Flüssigkeit und ein Gas in gegenläufiger Richtung gefördert werden.

Die US-A 4 278 527 zeigt und beschreibt eine zylindrische, vertikal angeordnete Elektrolysezelle, in der eine Elektrode als Drehteller mit Leitplatten zur Verwirbelung und mit Öffnungen zum Durchtritt der Flüssigkeit ausgebildet ist. Aus der DE-A 2 261 018 ist eine Gegenstromextraktionskolonne zur Flüssig-Flüssig-Extraktion bei gleichzeitiger Elektrolyse bekanntgeworden, bei welcher der Anodenraum diaphragmenlos vom Katodenraum umgeben ist, wie sie beispielsweise zum Trennen von Uran-Plutonium-Verbindungen Verwendung findet.

Aus der DE-A 2 429 035 ist eine elektrochemische Zelle mit vorzugsweise bipolar aufgebauten Elektrodenplatten bekanntgeworden, wobei die Elektrodenplatten zu Stapeln zusammengefaßt sind und wenigstens teilweise rotieren und der Elektrolyt durch eine die Elektroden tragende Hohlwelle eintritt. Die US-A 3 432 420 zeigt und beschreibt eine Elektrolysezelle mit auf nebeneinander angebrachten Isolatoren fix angebrachten Elektroden, zwischen denen jeweils ein Schaber mit mehreren Armen rotierbar gelagert ist.

Für die Spaltung von Emulsionen im Rahmen von Abwasseraufbereitungsanlagen ist es überdies bekannt, Elektrolysezellen vorzusehen, welche einem Klärbecken vorgeschaltet sind. Um bei derartigen Einrichtungen ein Verlegen der aktiven Elektrodenoberflächen zu verhindern, ist es bereits bekannt, in derartigen Elektrolysezellen Ultraschallsender anzuordnen, welche ein Absprengen der an der Elektrode anliegenden Feststoffe und Gasblasen bewirken sollen.

Im Rahmen von Abwasserkläranlagen sind in der Folge relativ große Klärbecken erforderlich, in welchen die Phasentrennung erfolgen soll und eine weitgehend gereinigte flüssige Phase und aufschwimmender Schlamm getrennt voneinander ausgetragen werden.

Die Erfindung zielt nun darauf ab, eine Elektrolysezelle der eingangs genannten Art zu schaffen, welche bei geringen Baumaßen gezielte Trennungen ermöglicht und in hohem Maße sicherstellt, daß die Elektrodenoberflächen über einen langen Betriebszeitraum frei von störenden Belägen bleiben. Zur Lösung dieser Aufgabe ist die erfindungsgemäße Elektrolysezelle im wesentlichen dadurch gekennzeichnet, daß die Zelle als Rohr ausgebildet ist, dessen Innenmantel eine Elektrode bildet, und daß die Scheiben mit der Rotationsachse in wenigstens einem dieselbe enthaltenden Schnitt einen Winkel größer oder kleiner 90° einschließen. Dadurch, daß die Zelle als Rohr ausgebildet ist, dessen Innenmantel eine Elektrode bildet, und die Gegenelektrode von rotierbar gelagerten Scheiben gebildet ist, wird ein zyklisches Eintauchen und Austauchen der Gegenelektrode erzielt, wodurch das Aufsteigen von Gasblasen und die Reinigung der Elektrodenoberflächen sichergestellt wird. Das jeweils von der Elektrodenoberfläche zyklisch abfließende Medium bewirkt eine zyklische Reinigung dieser Oberfläche, da die rotierbar gelagerten Scheiben lediglich über einen Teil ihrer Oberfläche in den Elektrolyten eintauchen. Sofern kein dichtender Anschluß an die Innenfläche des Rohres erfolgt, erlaubt die Schrägstellung der Scheiben einen mehr oder minder stark ausgeprägten Schereffekt, welcher wiederum das Anlagern von die Elektroden isolierenden Schadstoffen verhindert. Durch Wahl entsprechender Umdrehungsgeschwindigkeiten im Bereich von 5 bis 200 min$^{-1}$ läßt sich insbesondere bei höheren Umdrehungsgeschwindigkeiten ein Abschleudern der Flüssigkeit erzielen, wodurch der Reinigungseffekt verbessert werden kann. Im Falle der Verwendung der Einrichtung zum Zwecke der elektrolytisch stimulierten Flotation kann mit entsprechend geringeren Umdrehungsgeschwindigkeiten gearbeitet werden, um eine Zerstörung der aufschwimmenden Schaumschicht zu verhindern.

Die einzelnen Scheiben sind aus Gründen der elektrischen Isolation üblicherweise in Abstand von der inneren Oberfläche des Rohres angeordnet. Wenn ein mehr oder minder großes Ausmaß an Dichtung zwischen der Innenoberfläche des Rohres und den Scheiben gewünscht wird, kann am Umfang der Scheiben eine Dichtung aus elektrisch isolierendem Material vorgesehen sein. Mit Vorteil sind die Scheiben so angeordnet, daß die Winkel in Achsrichtung benachbarter Scheiben zur Rotationsachse abwechselnd größer oder kleiner 90° und vorzugsweise entgegengesetzt gleich sind. Im Falle einer mehr oder minder starken Dichtung zur Innenwand des Rohres ergibt sich eine peristaltische Bewegung der Flüssigkeitsoberfläche aufwärts und abwärts, wodurch gerichtete Strömungen zur Oberfläche oder von der Oberfläche weg erzielt werden können. Durch die Bewegung der Flüssigkeit kann eine wirksame Auftriebsunterstützung der freigesetzten, insbesondere elektrolytisch freigesetzten, leichteren Komponenten erzielt werden. Anstelle oder zusätzlich zu einem Zusatz von Polyelektrolyten kann eine elektrolytische Flotation durch eine derartige Bewegung der Scheiben unterstützt werden.

Mit Vorteil sind die einzelnen Scheiben mit gesonderten elektrischen Zuleitungen verbunden, so daß über die Länge des Rohres die Spannung variiert werden kann und beispielsweise erst in gesonderten, durch Trennwände abgetrennten, Kammern die Zersetzungsspannung des zu elektrolysierenden Mediums überschritten wird.

In besonders einfacher Weise sind die Scheiben im wesentlichen mit elliptischen Umrissen ausgebildet und weisen symmetrisch zur längeren Achse der Ellipse wenigstens eine Durchbrechung auf. Bei einer derartigen Ausbildung kann zusätzlich zu der Elektrolyse auch ein gewisser Fördereffekt sichergestellt werden, wenn die einzelnen Scheiben Überströmöffnungen aufweisen, welche an einer in Achsrichtung nachfolgenden Scheibe relativ zur vorangehenden Scheibe in Umfangsrichtung vorzugsweise um 180° versetzt angeordnet ist. Gerade bei einer solchen Ausbildung, bei welcher eine Zwangsbewegung des Mediums von einem Ende des Rohres zum anderen erfolgt, kann die gesonderte elektrische Zuleitung zu einzelnen Scheiben besondere Vorteile erbringen. In allen übrigen Fällen kann aber eine gerichtete Strömung durch externe Pumpen erzielt werden, sofern die Scheiben nicht dichtend an die Innenfläche des Rohres anschließen und keine Durchbrechungen aufweisen.

Zur weiteren Unterstützung der Gasentwicklung bzw. des Gasabtransportes kann das Rohr dichten und druckfest verschließbar sein, so daß erforderlichenfalls auch unter leichtem Unterdruck gearbeitet werden kann.

In den meisten Fällen wird die Anordnung vorzugsweise so getroffen, daß der Innenmantel des Rohres als Kathode und die Scheiben als Anode mit der Spannungsquelle verbunden sind.

Um die Auswechselbarkeit der Anode nach einer gewissen Betriebszeit zu erleichtern, ist mit Vorteil das Rohr in der die Achse enthaltenden Ebene geteilt und vorzugsweise eine Hälfte längs einer Erzeugenden des Rohres klappbar an der anderen Hälfte angelenkt. In allen Fällen ist mit Vorteil das Rohr im wesentlichen horizontal orientiert gelagert und die Füllhöhe auf weniger als den vollen lichten Querschnitt des Rohres, vorzugsweise den halben lichten Querschnitt desselben begrenzt.

Bei Ausbildung jeder Scheibe mit wenigstens einer achsnahen und wenigstens einer umfangsnahen Ausnehmung oder Durchbrechung und im übrigen weitgehend dichtendem Anschluß der einzelnen Scheiben an die Innenwand des Rohres kann ein gleichzeitiger gesonderter Transport zweier Phasen in verschiedene Richtungen dadurch erzielt werden, daß diese achsnahe und umfangsnahe Ausnehmung oder Druchbrechung in der Axialprojektion jeweils an benachbarten Scheiben in Umfangsrichtung versetzt angeordnet sind. Insbesondere bei der Verwendung der Einrichtung für die Flotation oder für das Entsalzen von Ölen lassen sich auf diese Weise zwei durch ihre dichte voneinander unterschiedene Phasen zu gesonderten Seiten der Vorrichtung abtransportieren und gesondert abziehen.

Die erfindungsgemäße Einrichtung eignet sich mit besonderem Vorteil zur Spaltung von Emulsionen unter Anwendung eines elektrischen Feldes. Ebenso ist die bereits erwähnte Flotation unter Anwendung eines elektrischen Feldes mit einer derartigen Einrichtung durchführbar, wobei eine überaus raumsparende und einfache und betriebssichere Einrichtung zur Verfügung gestellt wird. Ein besonderes Anwendungsgebiet der erfindungsgemäßen Vorrichtung liegt in der Entsalzung von Ölen, beispielsweise Heizölen, wobei nach Art einer Flüssig-Flüssig-Extraktion Deionat, d.h. deionisiertes Wasser bzw. enthärtetes Wasser zugesetzt wird, welches dem mit Salzen verunreinigten Öl die Salze durch Lösen derselben in Wasser entzieht. Bei Verwendung der oben genannten Einrichtung zum gesonderten Abtransport zweier Phasen unterschiedlicher Dichte läßt sich auf diese Weise das mit Salzen angereicherte Wasser und das Öl an gegenüberliegenden Stirnflächen der Einrichtung abziehen und auf diese Weise eine Separation der Phasen erzielen.

Mit Vorteil läßt sich die erfindungsgemäße Einrichtung auch zur Anreicherung von Schlämmen mit Nährstoffen, wobei Dünnschlamm und an Nährstoffen reiches Substrat, insbesondere im Gegenstrom, zugeführt wird und abgereichertes Substrat und angereicherter Schlamm abgezogen wird, oder zur Entsalzung von Meerwasser verwenden.

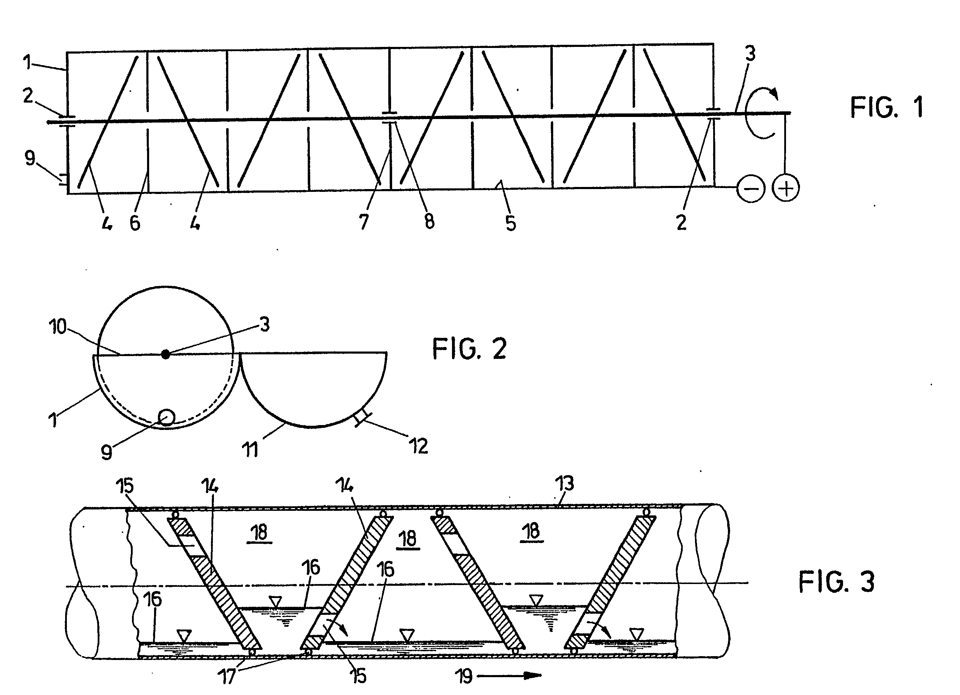

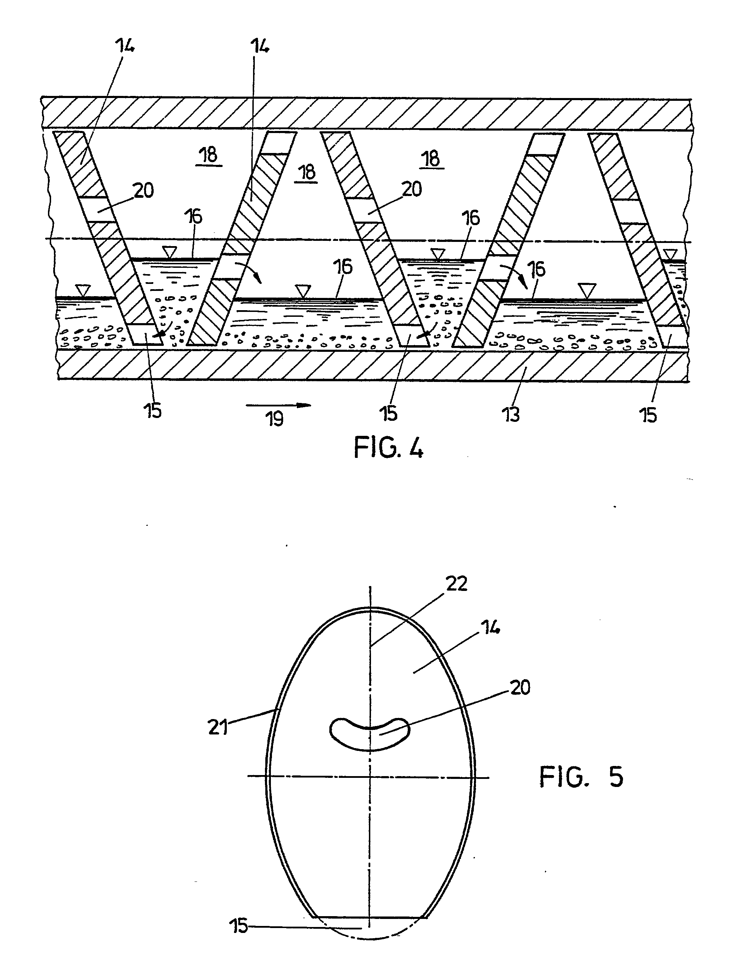

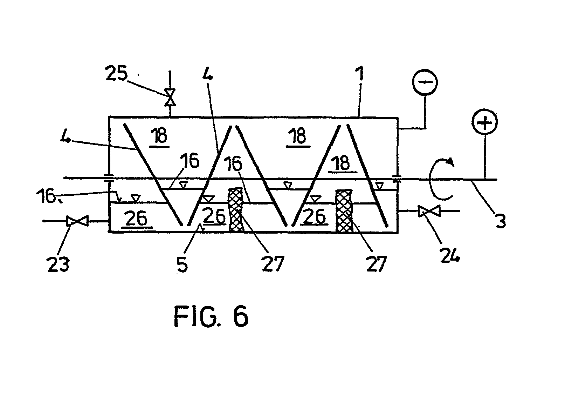

Die erfindungsgemäße Vorrichtung wird nachfolgend anhand der Zeichnung näher erläutert. In dieser zeigen: Fig. 1 eine Draufsicht auf eine erfindungsgemäße Einrichtung mit abgenommenem Deckel, Fig. 2 eine Seitenansicht der Einrichtung nach Fig. 1 bei abgeklapptem Deckel, Fig. 3 eine erfindungsgemäße Einrichtung, mit der gleichzeitig ein Zwangstransport des der elektolytischen Behandlung unterworfenen Mediums in eine Richtung möglich ist, Fig. 4 eine Einrichtung analog der Einrichtung nach Fig. 3, bei welcher der Transport von Medien unterschiedlicher Dichte in zwei Richtungen möglich ist, Fig. 5 eine Scheibe für die Verwendung in einer Einrichtung nach Fig. 4 und Fig. 6 einen schematischen Längsschnitt durch eine Einrichtung nach Fig. 1 mit Anschlüssen für die Zufuhr und Abfuhr des flüssigen Mediums sowie der Gasphase.

In Fig. 1 ist der Unterteil eines rohrförmigen Behälters mit 1 bezeichnet. In Lagern 2 ist eine rotierbar angetriebene Welle 3 angeordnet, welche drehfest mit Scheiben 4 verbunden ist. Die Scheiben 4 sind in dem in Fig. 1 dargestellten Axialschnitt abwechselnd gegensinnig geneigt und schließen mit der Welle 3 einen Winkel von abwechselnd größer und kleiner 90° ein. Die Welle 3 ist elektrisch mit dem Pluspol einer Spannungsquelle verbunden, wohingegen der Unterteil des rohrförmigen Behälters 1 zumindest an seiner Innenseite leitend ausgebildet ist und mit dem negativen Pol der Spannungsquelle verbunden ist. Die Kathode ist hiebei mit 5 bezeichnet, wohingegen die Anoden von den Scheiben 4 gebildet sind. Bei gesonderter Zuleitung zu den einzelnen Scheiben 4 kann selbstverständlich abwechselnd die Polarität geändert werden, wobei analoge Maßnahmen im Innenmantel des rohrförmigen Behälters 1 vorgesehen sein können. Im besonderen kann aber bei gleicher Polarität die Spannung, welche den einzelnen Scheiben 4 zur Verfügung gestellt wird, variiert werden. Zwischen den einzelnen Scheiben 4 sind Trennwände 6 angeordnet, welche von der Welle 3 durchsetzt werden. Die etwa mittig angeordnete Trennwand 7 trägt ein zusätzliches Lager 8 für die Welle 3. Über einen schematisch dargestellten Anschluß 9 wird diesem Unterteil des rohrförmigen Behälters 1 Flüssigkeit zugeführt. In Fig. 2 ist ersichtlich, daß der Behälter 1 in einer die Welle 3 enthaltenden Ebene 10 geteilt ausgebildet ist, wobei um eine zur Welle 3 parallele Erzeugende des Mantels des Behälters 1 der Deckel 11 abklappbar ist. Der Deckel 11 trägt einen Gasabzugsanschluß 12. In der Teilungsebene 10 können nicht dargestellte Dichtungen angeordnet sein, über welche ein dichtender Abschluß des Behälters nach dem Zuklappen des Deckels 11 sichergestellt wird.

Das Aufklappen des Deckels 11 in die in Fig. 2 dargestellte Position erleichtert das Entfernen und Austauschen der Anode, was insbesondere für Reinigungs- und Wartugsarbeiten vorteilhaft ist.

In Fig. 3 ist eine rohrförmige Elektrolysezelle 13 dargestellt, deren rotierbar gelagerte, die Anode bildenden Scheiben 14 Durchbrechungen 15 aufweisen. Die Durchbrechungen 15 der jeweils in Achsrichtung nachfolgenden Scheibe 14 sind relativ zur vorangehenden Scheibe in Umfangsrichtung um 180° versetzt angeordnet, so daß jeweils nur jede zweite Scheibe mit einer Durchbrechung unterhalb des Flüssigkeitsspiegels 16 gelangt. Bei weitgehend dichtendem Abschluß, welcher durch ein elektrisch isolierendes Dichtmittel 17 bewirkt werden kann, ergibt sich auf Grund der Schrägstellung der Scheiben 14 eine peristaltische Auf- und Abbewegung des Flüssigkeitsspiegels 16 in voneinander getrennten Kammern 18 und durch das Eintauchen der Durchbrechungen 15 unterhalb des Flüssigkeitsspiegels wird jeweils eine gerichtete Strömung vom jeweils höheren Flüssigkeitsniveau zum jeweils niederen Flüssigkeitsniveau sichergestellt. Es ergibt sich somit insgesamt gleichzeitig mit der elektrolytischen Behandlung eine Strömungsrichtung in Richtung des Pfeiles 19.

Eine gegenläufige Strömung zweier Medien mit unterschiedlicher Dichte, insbesondere beim Aufschwimmen von Schlämmen oder Trennen von flüssigen Phasen, ergibt sich mit der Ausbildung nach Fig. 4, wenn jede der Scheiben 14, welche wiederum die Anode bilden, zusätzlich zu einer achsfernen Durchbrechung 15 eine achsnahe Durchbrechung 20 aufweist. Auch hier gilt wiederum, daß eine in Achsrichtung nachfolgende Scheibe relativ zur vorangehenden Scheibe die entsprechenden Durchbrechungen in Umfangsrichtung, vorzugsweise um 180° versetzt, aufweist, so daß abwechselnd jeweils eine achsnahe Durchbrechung 20 und eine achsferne Durchbrechung 15 mit dem flüssigen Medium zusammenwirkt. Auf diese Weise ergibt sich für die aufschwimmende Phase eine Strömungsrichtung im Sinne des Pfeiles 19 und für das Sediment bzw. den Unterlauf eine der Strömungsrichtung entegegengesetzte Strömungsrichtung durch die achsfernen Durchbrechungen 15. Um eine entsprechende Höhendifferenz für die Strömung von einer Kammer 18 in die benachbarte Kammer 18 sicherzustellen, muß auch hier wiederum für einen geeigneten dichtenden und isolierenden Abschluß an die Innenwand des rohrförmigen Behälters 13 gesorgt werden.

Eine Scheibe, wie sie als Elektrode bei der Ausbildung nach Fig. 4 eingesetzt werden kann, ist in Fig. 5 vergrößert dargestellt. Die Scheiben 14 weisen im wesentlichen elliptischen Umriß auf und tragen an ihrem Umfang eine Dichtung 21 aus elektrisch isolierendem Material. Die Durchbrechung 15 für den Unterlauf ist als die Hauptachse 22 der elliptischen Grundform orthogonal schneidendes Segment ausgebildet, wohingegen die Durchbrechung 20 für den Überlauf als Bohrung oder als Langloch ausgebildet sein kann.

In Fig. 6 ist schematisch ein Axialschnitt durch eine vollständige Einrichtung dargestellt, wobei der Zulauf des flüssigen Mediums über ein Ventil 23 absperrbar ist. Analog ist der Ablauf der flüssigen Phase durch ein Ventil 24 absperrbar und schließlich ist auch der Gasabzug durch eine entsprechende Absperrvorrichtung 25 abschließbar bzw. drosselbar. Es ergibt sich somit insgesamt eine dichte Konstruktion einer rohrförmigen Elektrolysezelle 1. Je nach Viskosität des zu elektrolysierenden Materials ergibt sich auch dann ein Anheben und Absinken des Flüssigkeitsspiegels 16 in benachbarten Kammern 18, wenn die einzelnen Scheiben 4 nicht dichtend an die Innenwand des rohrförmigen Behälters anschließen. Die flüssige Phase ist hier mit 26 bezeichnet. Im Inneren des Rohres 1 sind hier Einbauten 27 vorgesehen, welche die Koagulation begünstigen.

Zwischen den Scheiben können auch Elektroden angeordnet sein, welche von axial gerichteten Scheiben gebildet sind.

Weiters können am Umfang der Scheiben axial orientierte mit den Scheiben rotierende Rohrabschnitte als Verschleißelektroden ausgebildet sein.

Für die Entsalzung von Meerwasser sind benachbarte Scheiben abwechselnd mit verschiedener Polarität geschalten und Trennscheiben Überströmkanälen, Membranen, porösen Körpern od.dgl. zwischen den Scheiben angeordnet.

**Patentansprüche**

1. Elektrolysezelle (1, 13) mit in einen Elektrolyten eintauchenden Elektroden, einer Zuflußöffnung (9), einer Abflußöffnung und einem Gasabzug (12), wobei eine Elektrode von rotierbar gelagerten Scheiben (4, 14) gebildet ist, welche über einen Teil ihrer Oberfläche in den Elektrolyten eintauchen und deren Rotationsachse im wesentlichen parallel zur Flüssigkeitsoberfläche (16) angeordnet ist, dadurch gekennzeichnet, daß die Zelle als Rohr (1, 13) ausgebildet ist, dessen Innenmantel eine Elektrode bildet, und daß die Scheiben (4, 14) mit der Rotationsachse in wenigstens einem dieselbe enthaltenden Schnitt einen Winkel größer oder kleiner 90° einschließen.

2. Elektrolysezelle nach Anspruch 1, dadurch gekennzeichnet, daß die Winkel in Achsrichtung benachbarter Scheiben (4, 14) zur Rotationsachse abwechselnd größer oder kleiner 90° und vorzugsweise entgegengesetzt gleich sind.

3. Elektrolysezelle nach Anspruch 1 oder 2, dadurch gekennzeichnet, daß einzelne Scheiben (4, 14) mit gesonderten elektrischen Zuleitungen verbunden sind.

4. Elektrolysezelle nach einem der Ansprüche 1, 2 oder 3, dadurch gekennzeichnet, daß die Scheiben (14) im wesentlichen elliptischen Umriß aufweisen und symmetrisch zur längeren Achse (22) der Ellipse wenigstens eine Durchbrechung (15) aufweisen.

5. Elektrolysezelle nach einem der Ansprüche 1 bis 4, dadurch gekennzeichnet, das der Innenmantel (5) des Rohres (1) als Kathode und die Scheiben (4) als Anode mit der Spannungsquelle verbunden sind.

6. Elektrolysezelle nach einem der Ansprüche 1 bis 5, dadurch gekennzeichnet, daß die einzelnen Scheiben (14) Überströmöffnungen (20) aufweisen, welche an einer in Achsrichtung nachfolgenden Scheibe (14) relativ zur vorangehenden Scheibe (14) in Umfangsrichtung, vorzugsweise um 180°, versetzt angeordnet sind.

7. Elektrolysezelle nach Anspruch 6, dadurch gekennzeichnet, daß jede Scheibe (14) wenigstens eine achsnahe (20) und wenigstens eine umfangsnahe (15) Ausnehmung oder Durchbrechung aufweist, welche in der Axialprojektion jeweils an banachbarten Scheiben (14) in Umfangsrichtung versetzt angeordnet sind.

8. Elektrolysezelle nach einem der Ansprüche 1 bis 7, dadurch gekennzeichnet, daß der Rohr (1) in der die Achse enthaltenden Ebene (10) geteilt ist und vorzugsweise eine Hälfte (11) längs einer Erzeugenden des Rohres klappbar an der anderen Hälfte angelenkt ist.

9. Elektrolysezelle nach einem der Ansprüche 1 bis 8, dadurch gekennzeichnet, daß das Rohr (1, 13) im wesentlichen horizontal orientiert gelagert ist und die Füllhöhe (16) auf weniger als den vollen lichten Querschnitt des Rohres (1, 13), vorzugsweise den halben lichten Querschnitt desselben, begrenzt ist.

10. Elektrolysezelle nach einem der Ansprüche 1 bis 9, dadurch gekennzeichnet, daß zwischen rotierenden Scheiben (4) ortsfeste Trennwände (6, 7) mit unterhalb des Flüssigkeitsspiegels liegenden Überströmöffnungen im Rohr (1) angeordnet sind.

11. Verwendung einer Einrichtung nach einem der Ansprüche 1 bis 10 zur Spaltung von Emulsionen unter Anwendung eines elektrischen Feldes.

12. Verwendung einer Einrichtung nach einem der Ansprüche 1 bis 9 zur Flotation unter Anwendung eines elektrischen Feldes.

13. Verwendung einer Einrichtung nach einem der Ansprüche 1 bis 9 zur Flüssig-Flüssig-Extraktion unter Anwendung eines elektrischen Feldes.

14. Verwendung einer Einrichtung nach einem der Ansprüche 6 bis 10 zur Anreicherung von Schlamm mit Nährstoffen, wobei Dünnschlamm und an Nährstoffen reiches Substrat, insbesondere im Gegenstrom, zugeführt wird und abgereichertes Substrat und angereicherter Schlamm abgezogen wird.

15. Verwendung einer Einrichtung nach einem der Ansprüche 6 bis 10 zur Entsalzung von Meerwasser.

**Claims**

1. Electrolytic cell (1, 13) with electrodes dipping into an electrolyte, with an inflow orifice (9), an outflow orifice and a gas vent (12), an electrode being formed by rotatably mounted plates (4, 14) which dip over a part of their surface into the electrolyte and whose axis of rotation is arranged essentially parallel to the surface of the liquid (16), characterized in that the cell is designed as a tube (1, 13) whose inside casing forms an electrode, and in that the plates (4, 14) enclose, with the axis of rotation, an angle greater than or less than 90° in at least one cross-section containing said axis.

2. Electrolytic cell according to Claim 1, characterized in that the angles to the axis of rotation in plates (4, 14) adjacent in the axial direction are alternately greater than or less than 90° and are preferably equal and opposed.

3. Electrolytic cell according to Claim 1 or 2, characterized in that individual plates (4, 14) are connected to separate electrical lines.

4. Electrolytic cell according to one of Claims 1, 2 or 3, characterized in that the plates (14) have an essentially elliptical contour and, symmetrically about the longer axis (22) of the ellipse, have at least one opening (15).

5. Electrolytic cell according to one of Claims 1 to 4, characterized in that the inside casing (5) of the tube (1) is connected to the voltage source as the cathode and the plates (4) as the anode.

6. Electrolytic cell according to one of Claims 1 to 5, characterized in that the individual plates (14) have overflow orifices (20) which are arranged on a plate (14) following in the axial direction offset relative to the previous plate (14) in the circumferential direction, preferably by 180°.

7. Electrolytic cell according to Claim 6, characterized in that each plate (14) has at least one recess or opening close to the axis (20) and at least one close to the circumference (15) which, in axial projection, are arranged in each case offset in the circumferential direction on adjacent plates (14).

8. Electrolytic cell according to one of Claims 1 to 7, characterized in that the tube (1) is split in the plane (10) containing the axis and one half (11) preferably has a hinged articulation with the other half along a generatrix of the tube.

9. Electrolytic cell according to one of Claims 1 to 8, characterized in that the tube (1, 13) is mounted so as to be oriented essentially horizontally and the filling height (16) is limited to less than the whole clear cross-section of the tube (1, 13), preferably less than half of its clear cross-section.

10. Electrolytic cell according to one of Claims 1 to 9, characterized in that partition walls (6, 7) fixed in location and with overflow orifices lying beneath the level of the liquid are arranged in the tube (1) between rotating plates (4).

11. Use of a device according to one of Claims 1 to 10 for the separation of emulsions with the application of an electric field.

12. Use of a device according to one of Claims 1 to 9 for flotation with the application of an electric field.

13. Use of a device according to one of Claims 1 to 9 for liquid-liquid extraction with the application of an electric field.

14. Use of a device according to one of Claims 6 to 10 for enriching slurry with nutrients, in which thin slurry and nutrient-rich substrate are fed in, in particular in countercurrent, and depleted substrate and enriched slurry is extracted.

15. Use of a device according to one of Claims 6 to 10 for desalinating sea water.

**Revendications**

1. Cellule d'électrolyse (1, 13) avec des électrodes plongeant dans un électrolyte, une ouverture d'alimentation (9), une sortie d'écoulement et une bouche d'extraction de gaz (12), l'une des électrodes étant constituée par des disques (4, 14) qui sont montés à rotation, qui plongent dans l'électrolyte sur une partie de leur surface, et dont l'axe de rotation est agencé sensiblement en direction parallèle à la surface (16) du bain de liquide, caractérisée en ce que la cellule est réalisée sous la forme d'un tube (1, 13) dont l'enveloppe intérieure constitue une électrode, et en ce que les disques (4, 14) forment avec l'axe de rotation, et dans au moins un plan de coupe renfermant cet axe, un angle plus grand ou plus petit que 90°.

2. Cellule d'électrolyse selon la revendication 1, caractérisée en ce que les angles par rapport à l'axe de rotation, de disques (4, 14) voisins en direction axiale, sont alternativement supérieurs ou inférieurs à 90°, et sont de préférence égaux et opposés.

3. Cellule d'électrolyse selon la revendication 1 ou 2, caractérisée en ce que les disques individuels (4, 14) sont reliés à des canalisations électriques individuelles.

4. Cellule d'électrolyse selon l'une des revendications 1, 2 ou 3, caractérisée en ce que les disques (14) présentent un contour sensiblement de forme elliptique, et comportent au moins une ouverture de passage (15) symétrique par rapport au grand axe (22) de l'ellipse.

5. Cellule d'électrolyse selon l'une des revendications 1 à 4, caractérisée en ce que l'enveloppe intérieure (5) du tube (1) est reliée à la source de courant électrique pour constituer la cathode, et en ce que les disques (4) sont reliés à la source de courant électrique pour constituer l'anode.

6. Cellule d'électrolyse selon l'une des revendications 1 à 5, caractérisée en ce que les divers disques individuels (14) présentent des ouvertures de trop-plein (20) qui sont agencées de manière à être décalées de préférence de 180°, entre un disque (14) suivant en direction axiale, et le disque (14) précédent.

7. Cellule d'électrolyse selon la revendication 6, caractérisée en ce que chaque disque (14) présente au moins une ouverture de passage (20) proche de l'axe, et au moins une ouverture de passage (15) proche de la périphérie, qui, sur des disques voisins (14) et en projection axiale, sont décalées mutuellement.

8. Cellule d'électrolyse selon l'une des revendications 1 à 7, caractérisée en ce que le tube (1) est divisé dans le plan (10) renfermant l'axe, et en ce que de préférence, l'une des moitiés (11) est articulée sur l'autre moitié, de manière rabattable, le long d'une génératrice du tube.

9. Cellule d'électrolyse selon l'une des revendications 1 à 8, caractérisée en ce que le tube (1, 13) est monté de manière sensiblement horizontale, et en ce que le niveau de remplissage (16) du tube est limité à une valeur inférieure à la section de passage totale libre du tube (1, 13), et de préférence à la moitié de la section de passage libre du tube.

10. Cellule d'électrolyse selon l'une des revendications 1 à 9, caractérisée en ce que des cloisons de séparation fixes (6, 7), avec des ouvertures de trop-plein situées en-dessous du niveau du liquide, sont agencées entre les disques rotatifs (4), dans le tube (1).

11. Application d'un agencement selon l'une des revendications 1 à 10, pour la dissociation d'émulsions à l'aide d'un champ électrique.

12. Application d'un agencement selon l'une des revendications 1 à 9, pour la flottation à l'aide d'un champ électrique.

13. Application d'un agencement selon l'une des revendications 1 à 9, pour l'extraction liquide-liquide à l'aide d'un champ électrique.

14. Application d'un agencement selon l'une des revendications 6 à 10, pour l'enrichissement de boues avec des agents nutritifs, des boues pauvres et du substrat riche en agents nutritifs étant amenés, notamment à contre-courant, les boues enrichies et le substrat appauvri étant évacués.

15. Application d'un agencement selon l'une des revendications 6 à 10, pour le dessalement d'eau de mer.

FIG. 1

FIG. 2

FIG. 3

FIG. 4

FIG. 5

FIG. 6